# EUROPEAN PATENT APPLICATION

(11) **EP 1 642 797 A1**
(43) Date of publication of application: **05.04.2006**
(21) Application number: 03748732.9
(22) Date of filing: 06.10.2003
(51) Int. Cl.: B61B 13/06, B61B 13/04

(54) **CARRYING SYSTEM**

(30) Priority: 07.07.2003 JP 2003271502
(71) Applicant: Senyo Kiko Co., Ltd., Osaka-shi, Osaka 556-0016 (JP)
(72) Inventor: YAMADA, Saburo Senyo Kiko Co., Ltd., Osaka-shi, Osaka 556-0016 (JP)
(74) Representative: Appelt, Christian W.
(86) International application number: PCT/JP2003/012794
(87) International publication number: WO 2005/002943

(57) **Abstract**

A transport system is provided, which has the capability of increasing a gripping force (contact pressure) of a drive wheel on a rail at a slop region of the rail to safely and efficiently transport an object. This transport system has a main rail, a vehicle carrying the drive wheel rotatable on the main rail and a drive unit for the drive wheel, a coupling unit connected at its one end to the vehicle and at the other end to the object, an auxiliary rail formed under the main rail at the slope region of the main rail, an auxiliary wheel held by the coupling unit to be rotatable on the auxiliary rail without contacting the main rail, and an elastic-force loading unit configured to apply an elastic force in a direction of pressing the auxiliary wheel against the auxiliary rail.

## Description

### TECHNICAL FIELD

The present invention relates to a transport system, and particularly a suspended-type transport system, which has the capability of efficiently and safely transporting an object in a slope region as well as a horizontal region of a rail.

### BACKGROUND ART

A suspended-type transport system, e.g., a monorail transport system is widely utilized as a transport means between two locations spaced from each other by a short or middle distance (e.g., 5 to 20 km), and comprised of a rail formed in a predetermined route, a vehicle carrying a drive wheel rotatable on the rail and a motor for driving the drive wheel, and an object such as a carriage connected to an end of a coupling member hanging from the vehicle. In this kind of transport system, since the rail is supported by bridge piers formed at a required interval on the ground, there are advantages that the transportation route can be designed with a high degree of freedom, and a land area needed to construct the transport system can be reduced, as compared with the general transport system with a rail line directly put on the ground. On the other hand, when the transport system is constructed at sites with complex topographic features, it often has a lot of slope regions of the rail.

By the way, in the slope regions of the rail, there is a fear that a running posture of the object to be transported becomes unstable, or the smooth running cannot be provided. Due to these problems, various kinds of countermeasures are proposed. In particular, when the object to be transported is a passenger carriage, the running performance in the slope regions is an important subject to be improved from the viewpoint of safely and comfortably transporting the passengers.

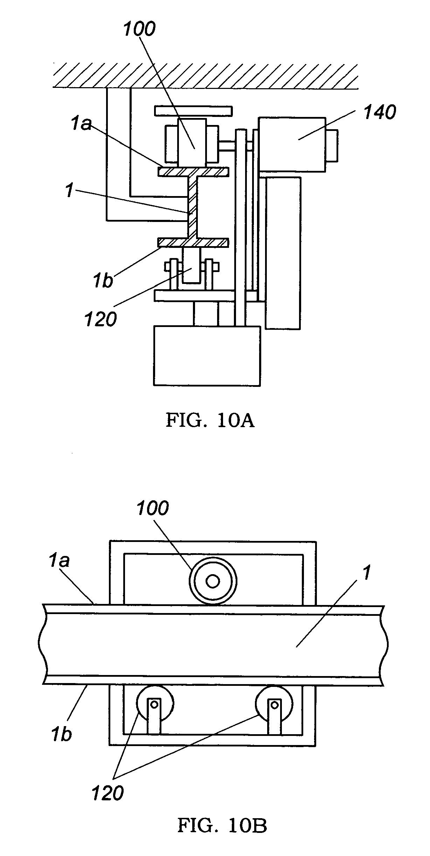

For example, Japanese Patent Early Publication [kokai] No. 1-204819 discloses a track device for smoothly transporting an object. As shown in FIGS. 10A and 10B, this track device is formed with a drive wheel **100** that runs on an upper surface **1a** of a rail **1,** and an auxiliary wheel **120** elastically contacting a lower surface **1b** of the rail **1,** so that the rail is caught between the drive wheel and the auxiliary wheel in the up and down direction. Since an increase in contact pressure between the drive wheel and the rail provides an improved gripping force of the drive wheel on the rail, the object can be stably transported even in the slop regions of the rail.

In the above track device, since both of the drive wheel and the auxiliary wheel contact the rail over the entire regions including the slop regions and horizontal regions of the rail, a high contact pressure between the drive wheel and the rail is always maintained when the vehicle is running. However, there is a problem that the contact pressure leads to an increase in energy cost needed to transport the object. In addition, when a large and high power motor **140** is mounted on the vehicle to provide the running of the vehicle under the high contact pressure, there is a fear that the energy cost further increases due to the total weight of the vehicle. Thus, there is still plenty of room for improvement in the conventional transport system from the viewpoints of safely and comfortably transporting the object with energy conservation.

### SUMMARY OF THE INVENTION

In view of the above problems, a primary concern of the present invention is to provide an improved transport system having the capability of safely and smoothly transporting an object even in a slope region of a rail, while conserving energy needed to transport the object.

That is, the transport system of the present invention is characterized by having:
a main rail formed along a required route and having at least one slope region; an auxiliary rail formed under the main rail in the slope region of the main rail;
a vehicle coupled to an object to be transported, and carrying a drive wheel rotatable on an upper surface of the main rail and a drive unit for the drive wheel;
an auxiliary wheel held by the vehicle to be rotatable on the auxiliary rail without contacting the main rail; and
an elastic-force loading unit configured to apply an elastic force in a direction of pressing the auxiliary wheel against the auxiliary rail.

According to the present invention, since the auxiliary wheel elastically contacts only the auxiliary rail formed in the slope region of the main rail, and the main rail and the auxiliary rail are caught between the drive wheel and the auxiliary wheel, a large contact pressure (gripping force) can be obtained between the drive wheel and the main rail. Thereby, it is possible to efficiently and smoothly move the vehicle upward and downward in the slope region of the rail without preventing slippage of the drive wheel. On the other hand, in a horizontal region of the main rail, since the auxiliary wheel does not contact the rail, it is possible to obtain the running of the drive wheel on the main rail under a small friction resistance without excessively pressing the drive wheel against the main rail. That is, a high gripping force is obtained in the slope region of the main rail, and a moderate grip force is obtained in the horizontal region of the main rail where the auxiliary rail is not formed. Consequently, the object can be efficiently transported with energy conservation.

In addition, it is preferred that the above transport system has a first sprocket disposed at a high position side of the slope region, a second sprocket disposed at a low position side of the slope region, an endless belt looped between the first sprocket and the second sprocket, an engaging means formed on the endless belt, and an auxiliary drive unit configured to drive at least one of the first sprocket and the second sprocket to move the vehicle engaged to the engaging means from the low position side to the high position side of the slope region. By use of the auxiliary drive unit, a smooth upward movement of the vehicle is obtained in the slope region. In addition, when the vehicle is moved downward in the slope region, a brake effect can be provided to the vehicle. As a result, since a larger inclination angle of the rail is available, it is possible to provide an improved degree of freedom of designing the transport system. Moreover, since it is not needed to mount a high power drive motor on the vehicle, an increase in weight of the vehicle can be prevented to further reduce the energy cost for transporting the object.

In the above transport system, it is also preferred that the main rail is formed in an H shape with an upper flange, a lower flange, and a web extending between the upper flange and the lower flange, the drive wheel is rotatable on the upper flange, and the vehicle has a pair of driven wheels rotatable on opposite surfaces of the web. In this case, by catching the web of the rail between the driven wheels, it is possible to prevent that the drive wheel goes off the main rail, and therefore further improve the safety of the transportation.

In addition, it is preferred that a shock absorbing material is disposed between the driven wheel and the upper flange. For example, even when the drive wheel is instantaneously left from the main rail by a gust of wind, an impact force caused when the drive wheel lands on the main rail can be effectively reduced by the shock absorbing material. Therefore, the safety of the transportation can be further improved. This is particularly effective when the object to be transported is a passenger carriage.

The transport system according to a specific preferred embodiment of the present invention is a suspended-type transport system, which is characterized by having:
a main rail formed along a required route and having at least one slope region;
an auxiliary rail formed under the main rail in the slope region of the main rail
a vehicle carrying a drive wheel rotatable on an upper surface of the main rail and a drive unit for the drive wheel;
a coupling unit connected at its one end to the vehicle and at the other end to an object to be transported, and
an auxiliary wheel held by the coupling means to be rotatable on the auxiliary rail without contacting the main rail; and
an elastic-force loading unit configured to apply an elastic force in a direction of pressing the auxiliary wheel against the auxiliary rail;
wherein a distance between the drive wheel and the auxiliary wheel is determined to be larger than a thickness of the main rail, and smaller than a total thickness of the main rail and the auxiliary rail, and the distance between the drive wheel and the auxiliary wheel is extended against the elastic force of the elastic-force loading unit by the main rail and the auxiliary rail in the slope region to increase a contact pressure of the drive wheel on the main rail.

Further purposes and effects of the present invention will be more clearly understood from the best mode for carrying out the invention described below.

### BRIEF EXPLANATION OF THE DRAWINGS

FIG. 1 is a schematic diagram of a transport system according to a preferred embodiment of the present invention;
FIGS. 2A to 2C are side, top and front views of a vehicle running in a horizontal region of a rail;
FIGS. 3A and 3B are side and front views of the vehicle running in a slope region of the rail;
FIG. 4 is a schematic diagram of the transport system with an auxiliary drive unit of the present invention;
FIG. 5 is an enlarged side view of the transport system of FIG. 4;
FIG. 6 is a front view of the transport system of FIG. 4;
FIGS. 7A and 7B are top and side views of an engaging means of the auxiliary drive unit;
FIG. 8 is a cross-sectional view of a cushioning member disposed between the rail and a driven wheel;
FIG. 9 is a schematic diagram of a transport system according to a modification of the above embodiment; and
FIGS. 10A and 10B are front and side views of a vehicle for a conventional transport system.

### BEST MODE FOR CARRYING OUT THE INVENTION

Referring to the attached drawings, a transport system of the present invention is explained in detail according to preferred embodiments.

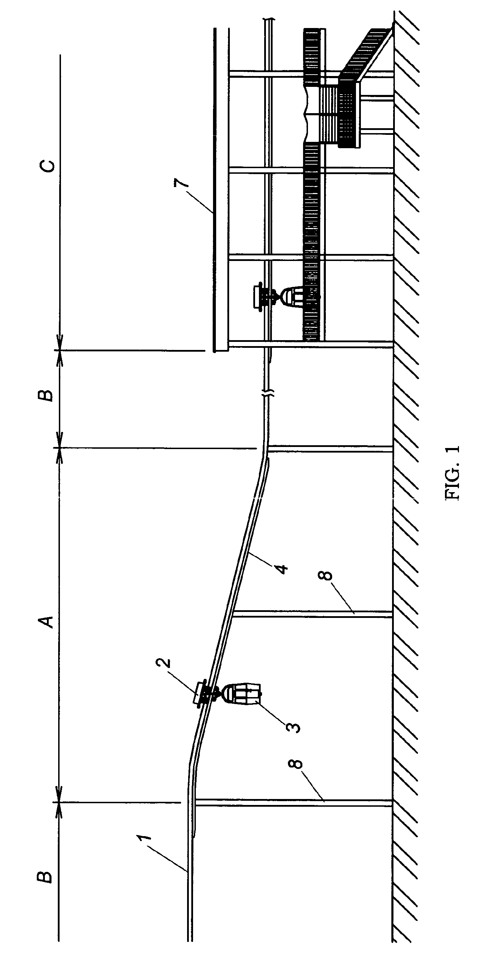

The transport system of this embodiment is a suspended-type monorail system. As shown in FIG. 1, this monorail system has a single main rail **1** held by bridge piers **8,** an auxiliary rail **4** disposed on a lower surface of the main rail **1** in a slope region **A** of the main rail **1,** a vehicle **2** carrying drive wheels rotatable on an upper surface of the main rail 1 and a drive unit for the derive wheels, a carriage **3** connected to a lower portion of the vehicle through a coupling member, and an auxiliary wheels held by the coupling member to be rotatable on the auxiliary rail **4** without contacting the main rail **1.** In FIG.1, the numeral **7** designates a platform constructed at a height that the passengers can easily and safely get on/off the carriage **3. "A"** designates the slope region of the main rail **1. "B"** designates a substantially horizontal region of the main rail **1.** "**C**" designates a stopping region for the carriage in the platform.

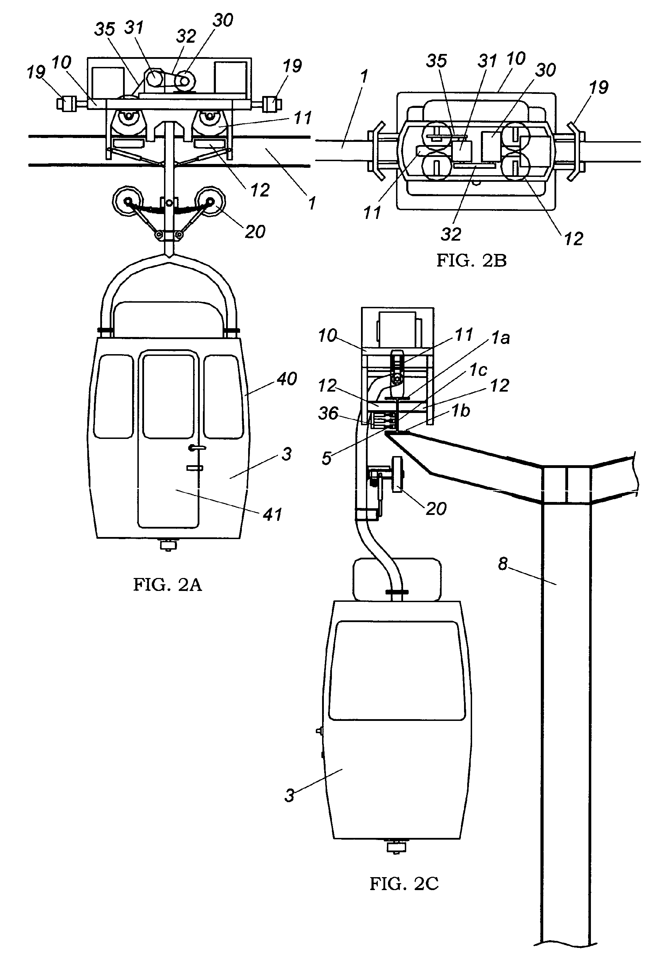

As shown in FIGS. 2A and 2B, a pair of drive wheels **11** and two pairs of driven wheels **12** are rotatably held by a base **10** of the vehicle **2.** In addition, a motor **30** for driving the drive wheels **11** through a power transmission unit is mounted on the base **10.** The pair of drive wheels **11** are spaced from each other by a constant distance in an extending direction of the main rail **1,** and contact the upper surface of the main rail **1.** As shown in FIG. 2C, the main rail **1** is made of a steel material, and has an H-shaped cross section (or I-shaped cross section), which is formed with a pair of upper and lower flanges (**1a**, **1b**) and a web **1C** extending therebetween. Therefore, the drive wheels **11** run on the upper flange **1a**, and the lower flange **1b** is secured to the bridge piers **8**. On the other hand, each pair of the driven wheels **12** are disposed to contact opposite surfaces of the web **1c**. Since the web **1c** is caught by the driven wheels **12** from both sides, it is possible to prevent that the drive wheels **11** go off the main rail **1** when the vehicle **2** is running. In this embodiment, as shown in FIG. 2B, the pair of driven wheels **12** are disposed at both sides of each of the drive wheels under the respective drive wheel **11.**

In this embodiment, an output of the motor **30** is transmitted to the drive wheel **11** through the power transmission unit, as described below. That is, pulleys are respectively attached to a rotating shaft of the motor **30** and a rotating shaft of a reduction device **31.** A belt **32** is looped between the pulleys to transmit the output of the motor to the reduction device **31.** Each of the reduction device **31** and one of the derive wheels **11** has a sprocket. A roller chain **35** is looped between the sprockets to transmit the rotational output of the motor **30** to the drive wheel **11** through the reduction device **31.** Thus, in this embodiment, the output of the motor **30** is transmitted to one of the drive wheels **11.** Alternatively, it may be transmitted to both of the drive wheels **11.** Electric power can be supplied to the motor **30** from a power supply line 5 installed at a lower flange side of the web **1c** of the main rail 1 through a collector **36** mounted on the base **10.**

The carriage **3** is provided by a gondola **40** for accommodating the passengers. The gondola **40** has a pair of passenger seats disposed at both of front and rear sides in the interior space, and a passenger door **41.** The electric power supplied through the collector **36** is also utilized for operations of opening/closing the passenger door, lighting in the gondola, and activating an air conditioner mounted. In the drawing, the numeral **"19"** designates a shock absorbing bumper disposed at the front and rear ends of the vehicle **2.**

FIGS. 2A to 2C shows that the vehicle **2** is running on the main rail **1** in the horizontal region. Since the drive wheels **11** are pressed against the main rail due to the total weight of the vehicle **2** and the carriage **3,** a moderate friction resistance (gripping force) is obtained between the drive wheels **11** and the main rail **1,** so that the drive wheels **11** can smoothly run on the main rail 1 in the horizontal region **B** without slippage. At this time, since the auxiliary rail **4** is not formed in the horizontal region, the auxiliary wheels **20** do not contact any rail, as shown in FIGS. 2A and 2C.

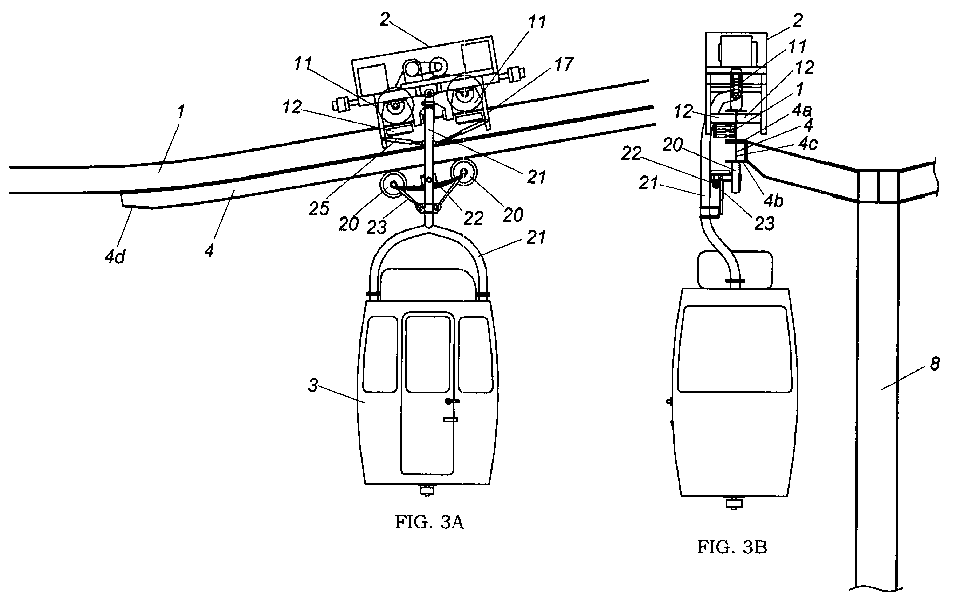

On the other hand, as shown in FIGS. 3A and 3B, the auxiliary rail **4** is disposed on the lower surface of the main rail **1** in the slope region **A.** As in the case of the main rail **1,** this auxiliary rail **4** is made of a steel material and has an H-shaped cross section (or I-shaped cross section), which is formed with a pair of upper and lower flanges (**4a**, **4b**) and a web **4c** extending therebetween. At the slope region **A**, the auxiliary rail **4** is secured to the bridge piers **8,** and the upper flange **4a** of the auxiliary rail **4** is fixed to the lower flange **1b** of the main rail **1.** The auxiliary wheels **20** contact the lower flange **4b** of the auxiliary rail **4.**

The pair of auxiliary wheels **20** are positioned substantially beneath the pair of drive wheels **11** through the main rail **1** and the auxiliary rail **4,** and supported by a coupling member **21** with a substantially Y-shape for coupling between the vehicle **2** and the carriage **3.** That is, a single end of the coupling member **21** is pivotally held by the base **10** of the vehicle **2** such that an axial direction of the coupling member **21** is equal to the gravity direction even in the slope region **A**, in other words, a floor of the carriage **3** is maintained in a substantially horizontal level. In addition, the coupling position of the coupling member **21** with the vehicle **2** is directly above the center of gravity of the carriage **3.** On the other hand, the other ends of the coupling member **21** are connected to a roof of the carriage **3.**

The auxiliary wheels **20** are held to the coupling member **21** by use of a spring member **22** such as a plate spring or a coil spring, which functions as an elastic-force loading unit configured to apply an elastic force in a direction of pressing the auxiliary wheel against the auxiliary rail **4.** That is, the auxiliary wheels **20** are connected to both ends of the spring member **22** through bearings. A substantially center portion of the spring member **22** is joined to the coupling member **21** such that the spring member is pivotable about a pin shaft. Therefore, even when the auxiliary wheels **20** run on the auxiliary rail **4** in the slope region **A**, the axial direction of the coupling member **21** can be always maintained in the gravity direction. In the drawing, the numeral **23** designates a damper connected between the bearing for each of the auxiliary wheels **20** and the coupling member **21.** The numeral **25** designates a damper connected between each of projections substantially formed at both sides of the pair of the drive wheels **11** of the vehicle **2** and the coupling member **21.** By these dampers, it is possible to absorb an impact force caused when the auxiliary wheels **20** contact the auxiliary rail **4,** and stably maintain the running posture of the carriage **3.**

A distance between the auxiliary wheel **20** and the drive wheel **11** of the vehicle **2** in the horizontal region **B** is determined to be larger than a thickness of the main rail **1,** and smaller than a total thickness of the main rail **1** and the auxiliary rail **4.** In the transport system satisfying the above-described size conditions, when the vehicle **2** comes in the slope region **A**, the auxiliary wheels **20** contact the auxiliary rail **4,** so that the distance between the drive wheel **11** and the auxiliary wheel **20** is extended. At this time, the spring member **22** is elastically deformed. A restoring force of the elastically deformed spring member presses the auxiliary wheels **20** against the auxiliary rail **4.** Consequently, this means an increase in contact pressure of the drive wheels **11** on the main rail **1.** In brief, in the slope region **A**, the main rail 1 and the auxiliary rail **4** are caught between the drive wheels **11** and the auxiliary wheels **20** by the elastic force of the spring member **22,** so that the contact pressure of the drive wheels **11** on the main rail **1** is increased. Thus, when the vehicle **2** runs under the condition that a large friction resistance (gripping force) occurs between the drive wheels **11** and the main rail **1,** it is possible to provide a smooth running of the vehicle **2** in the slope region **A** without causing slippage of the drive wheels **11** even in the rain.

As shown in FIG. 3A, starting and finishing ends of the auxiliary rail **4** have tapered portions **4d,** which is formed such that a thickness of the auxiliary rail **4** smoothly decreases toward its ends. By the formation of the tapered portions **4d,** the auxiliary wheels **20** can smoothly contact or leave the auxiliary rail **4.** Therefore, it is possible to comfortably transport the passengers. At least one of the starting and finishing ends of the auxiliary rail 4 may have the tapered portion **4d.**

In addition, as show in FIG. 1, at the stopping zone **C** for loading and unloading the object to be transported, it is preferred that the auxiliary rail **4** is formed on the lower surface of the main rail **1,** as in the case of the slope region **A**. Since the gripping force of the drive wheels **11** on the main rail **1** is increased at the time of starting the vehicle **2,** a smooth start of the vehicle can be achieved. In addition, the vehicle **2** can be stopped at the stopping zone **C** with reliability.

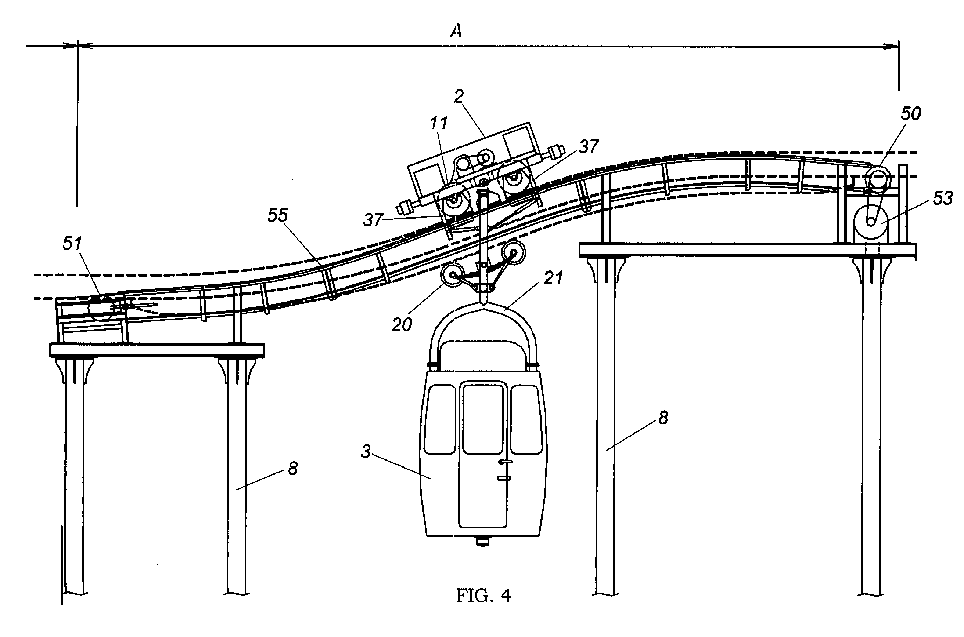

In the transport system of the present invention, it is particularly preferred to use an auxiliary drive unit for assisting an upward movement of the vehicle **2** along the slope region **A** from the viewpoints of reducing size and weight of the motor mounted on the vehicle and achieving energy conservation. That is, as shown in FIGS. 4 to 6, this auxiliary drive unit has a first sprocket **50** disposed at a high position side of the slope region **A**, a second sprocket **51** disposed at a low position side of the slope region **A**, an endless belt such as roller chains **52** looped between the first sprocket and the second sprocket, an engaging means formed on the roller chain to be engageable to the vehicle **2,** and an auxiliary motor **53** for driving the first sprocket **50** to move the vehicle **2** engaged to the engaging means from the low position side toward the high position side in the slope region **A.**

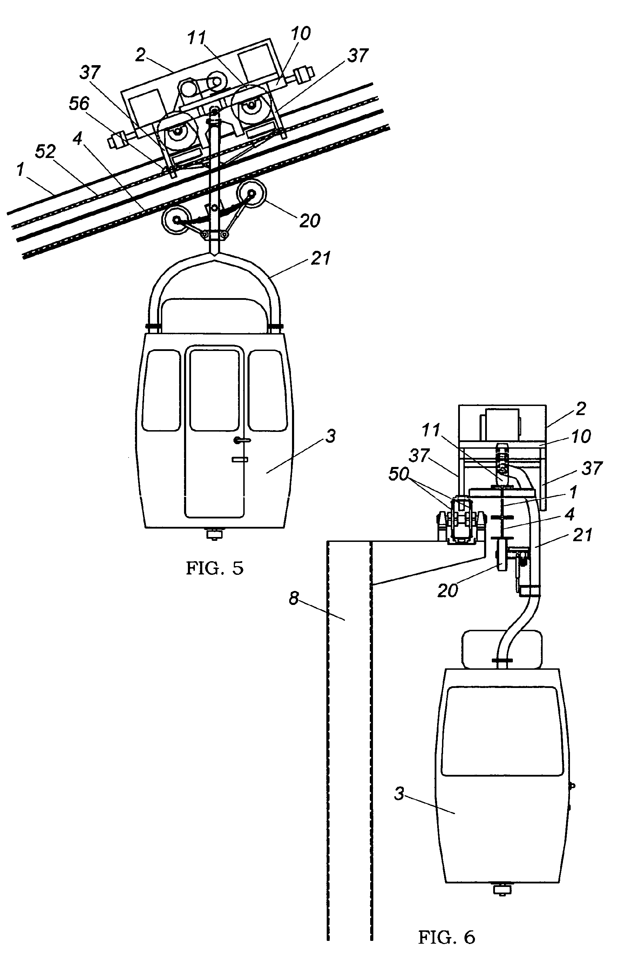

Specifically, as shown in FIG. 6, the first sprocket **50** is a pair of drive sprockets spaced in a transverse direction of the main rail **1**. These drive sprockets **50** are coupled to each other by a shaft portion. The drive sprockets **50** can be rotated by the auxiliary motor **53** installed on the bridge pier **8.** Similarly, the second sprocket **51** is a pair of driven sprockets spaced from the main rail **1** at the same side as the first sprocket **50.** The driven sprockets **51** are coupled to each other by a shaft portion, and rotatably supported on another bridge pier **8.** The roller chains **52** looped between the drive sprockets **50** and corresponding driven sprockets **51** are in parallel to each other. As shown in FIG. 4, the roller chains **52** are guided by guide members **55** formed along the main rail **1.**

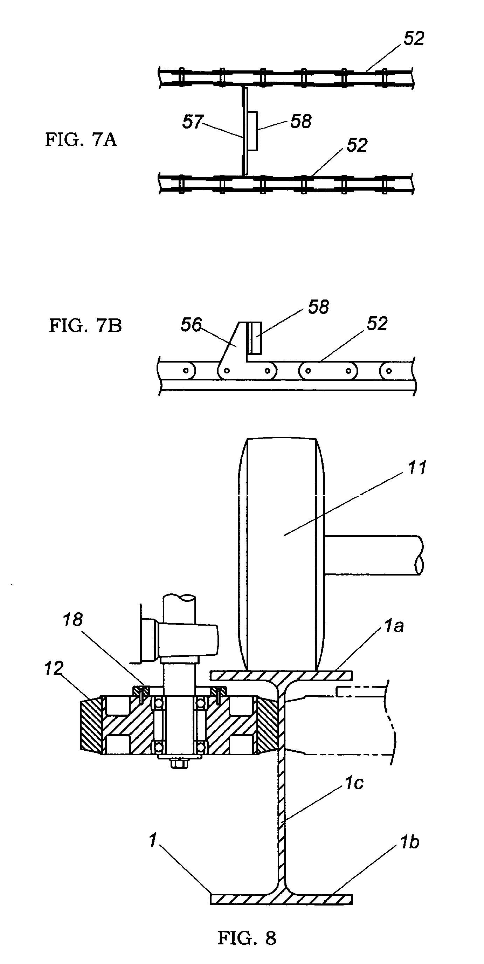

As shown in FIGS. 7A and 7B, each of the roller chains **52** is formed by coupling a plurality of cocoon-shaped links to each other. The numeral **56** designates projections formed on a required pair of links of the adjacent roller chains. In addition, the numeral **57** designates a joining plate extending between the projections **56** of the roller chains, and the numeral **58** designates a cushioning material such as hard rubber fixed on the joining plate **57.** On the other hand, the vehicle **2** has an engaging member **37** projecting downward from the base **10** as the engaging means. In the above configuration, when the roller chains **52** are rotated by the auxiliary motor **53,** the projections **56** of the roller chains contact the engaging member **37** of the vehicle **2** through the cushioning material **58,** so that the output of the auxiliary motor is transmitted to the vehicle. The auxiliary motor is controlled by a control unit (not shown). This control unit has a detector for detecting the vehicle **2** running on the rail, and controls the operation of the auxiliary motor according to an output of the detector.

According to the auxiliary drive unit described above, when the vehicle **2** is moved upward along the slope region **A** of the rail **1,** a rotation speed of the roller chains **52** is determined to be larger than the running speed of the vehicle. In this case, the cushioning material **58** fixed to the roller chains is pressed against the engaging member **37** to transmit the output of the auxiliary motor to the vehicle **2** through the roller chains. Thus, it is possible to provide the upward movement of the vehicle **2** along the rail **1** without reducing the speed. On the other hand, when the vehicle **2** is moved downward along the slope region **A** of the rail **1,** the rotation speed of the roller chains **52** is determined to be smaller than the running speed of the vehicle **2.** In this case, since the engaging member **37** is pressed against the cushioning material **58** fixed to the roller chains to prevent an increase in speed of the vehicle **2** in the downward direction. Thus, it is possible to provide a brake effect by the slow rotation of the roller chains, and therefore safely and smoothly move the vehicle **2** downward along the rail **1.**

Thus, by using the auxiliary drive unit, a design range of a rail inclination applicable for the upward and downward movements of the vehicle **2** is widened. This means an improvement in degree of freedom of designing the transport system. In addition, since the auxiliary drive unit is installed at a location other than the vehicle, e.g., on the bridge pier near the rail, a large motor is not needed as the motor **30** to be mounted on the vehicle. Therefore, the transportation cost can be further reduced by s a decrease in vehicle's weight.

In addition, as shown in FIG. 8, it is preferred that a protection member **18** made of an elastic material such as hard rubber is detachably disposed between the upper flange **1a** of the main rail **1** and the driven wheels **12.** The protection member **18** is formed in a ring shape extending around a shaft of the driven wheel **12,** and fixed to an upper surface of the driven wheel by use of screws. Therefore, by detaching the screws, the protection member can be removed from the driven wheel. In the case of using the protection member **18,** even when the drive wheels **11** are instantaneously left from the main rail **1** by a gust of wind, the protection member **18** can prevent that the driven wheels **12** directly contact the upper flange **1a** of the main rail **1.** In addition, since the protection member **18** is made of the elastic material, it is useful to reduce a shock caused by a contact of the vehicle **2** with the main rail **1.**

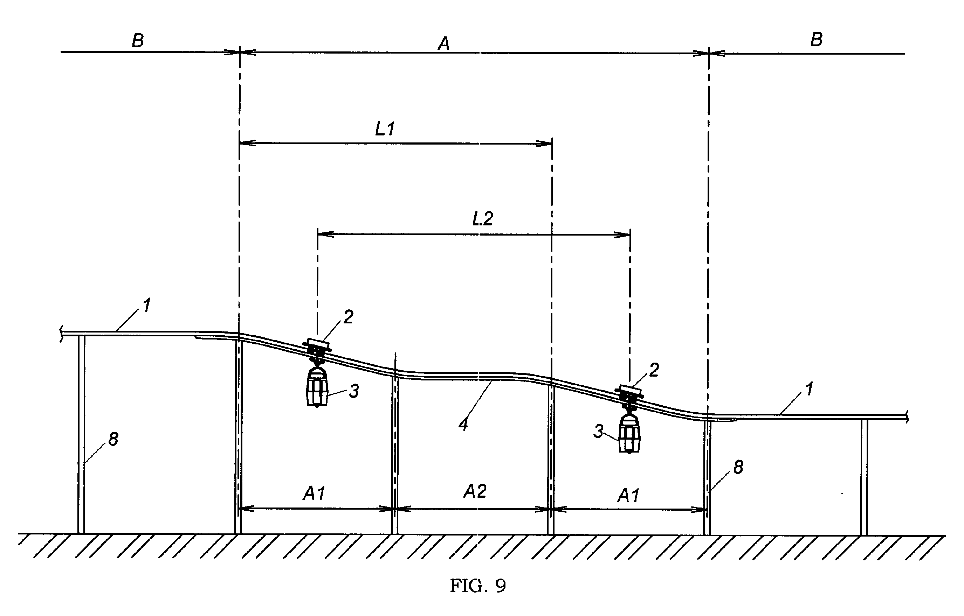

As a modification of the above embodiment, as shown in FIG. 9, a first slope region **A1** having a large inclination and a second slope region **A2** having a small inclination may be alternately formed in the slope region **A** of the rail. For example, when the slope region **A** is formed over a long distance by only the first slope region **A1,** the vehicle's speed is easily accelerated. However, according to this modification, the vehicle's speed accelerated in the first slope region **A1** can be reduced in the second slope region **A2.** Therefore, even when the slope region **A** is formed over the long distance, it is possible to provide a safe running of the vehicle.

In addition, eve when an accident such as blackout occurs, the vehicle **2** running in the first slope region **A1** can be safely stopped by the second slope region **A2.** In addition, by appropriately designing the inclination angle and the length of the second slope region **A2,** the vehicle can be naturally stopped by friction resistances between the drive wheels **11** and the main rail **1** and between the auxiliary wheels **20** and the auxiliary rail **4.** When the inclination angle of the second slope region **A2** is small, the auxiliary rail **4** may be omitted. In addition, a down slope region having a relatively steep inclination and an up slop region having a relatively gentle inclination may be alternately formed as the slope region of the rail.

When two vehicles **2** run on the main rail **1,** while keeping an interval therebetween, it is preferred that a horizontal distance **L2** between the two vehicles is determined to be larger than a total horizontal distance **L1** of the first slope region **A1** and the second slop region **A2.** In this case, even when a blackout occurs, the vehicles **2** running in the different first slope regions **A1** are respectively slowed down or stopped by the second slope regions **A2** formed at different heights. Therefore, it is possible to prevent a collision between the two vehicles, and further improve the safety of the transport system.

In the above embodiment, each of the bridge piers **8** has a Y-shaped configuration having a pair of supporting arms. The main rail **1** for outward route is disposed on one of the supporting arms, and the main rail **1** for homeward route is disposed on the other supporting arm. Opposite ends of both of the main rails **1** for the outward and homeward routes are connected to each other in a loop manner. Alternatively, another rail layout may be used. For example, a single rail disposed on bridge piers may be commonly used for the outward and homeward routes.

### INDUSTRIAL APPLICABILITY

As described above, according to the present invention, it is possible to provide an energy-conservation type transport system having the capability of safely and smoothly transporting the object even in the slope region of the rail, and reducing the energy cost needed for the transportation. In addition, even at land sites having a relatively large vertical interval, it is possible to prevent slippage of the drive wheel, and therefore comfortably transport the passengers. Thus, it is expected to be utilized as a near-future type traffic system having a high degree of freedom of layout of the rail.

## Claims

1. A transport system comprising:
a main rail formed along a required route and having at least one slope region;
an auxiliary rail formed under said main rail in the slope region of said main rail;
a vehicle coupled to an object to be transported, and carrying a drive wheel rotatable on an upper surface of said main rail and a drive means for said drive wheel;
an auxiliary wheel held by said vehicle to be rotatable on said auxiliary rail without contacting said main rail; and
an elastic-force loading means configured to apply an elastic force in a direction of pressing said auxiliary wheel against said auxiliary rail.

2. The transport system as set forth in claim 1, wherein said vehicle comprises a coupling means for coupling between said vehicle and said object positioned under said vehicle, and said auxiliary wheel and said elastic-force loading means are held by said coupling means.

3. The transport system as set forth in claim 1, wherein a distance between said drive wheel and said auxiliary wheel is determined to be larger than a thickness of said main rail, and smaller than a total thickness of said main rail and said auxiliary rail, and the distance between said drive wheel and said auxiliary wheel is extended against the elastic force of said elastic-force loading means by said main rail and said auxiliary rail in the slope region to increase a contact pressure of said drive wheel on said main rail.

4. The transport system as set forth in claim 1, further comprising:
a first sprocket disposed at a high position side of the slope region;
a second sprocket disposed at a low position side of the slope region;
an endless belt looped between the first sprocket and the second sprocket an engaging means formed on said endless belt;
an auxiliary drive means configured to drive at least one of the first sprocket and the second sprocket to move said vehicle engaged to said engaging means from the low position side to the high position side of the slope region.

5. The transport system as set forth in claim 1, wherein said main rail is formed in an H shape with an upper flange, a lower flange, and a web extending between the upper flange and the lower flange, and wherein said drive wheel is rotatable on the upper flange, and said vehicle has a pair of driven wheels rotatable on opposite surfaces of said web.

6. The transport system as set forth in claim 5, comprising a shock absorbing material disposed between said driven wheel and the upper flange.

7. The transport system as set forth in claim 1, wherein the slope region is provided by alternately forming a first slope region and a second slope region having a different inclination from the first slope region.

8. The transport system as set forth in claim 1, wherein said main rail has a stopping region, at which said object to be transported is loaded and unloaded, and said auxiliary rail is disposed under said main rail at the stopping region.

9. The transport system as set forth in claim 1, wherein at least one of starting and finishing ends of said auxiliary rails has a tapered portion formed such that a thickness of said auxiliary rail smoothly decreases toward its end.

10. A suspended-type transport system comprising:
a main rail formed along a required route and having at least one slope region;
an auxiliary rail formed under said main rail in the slope region of said main rail;
a vehicle carrying a drive wheel rotatable on an upper surface of said main rail and a drive means for said drive wheel;
a coupling means connected at its one end to said vehicle and at the other end to an object to be transported;
an auxiliary wheel held by said coupling means to be rotatable on said auxiliary rail without contacting said main rail; and
an elastic-force loading means configured to apply an elastic force in a direction of pressing said auxiliary wheel against said auxiliary rail;
wherein a distance between said drive wheel and said auxiliary wheel is determined to be larger than a thickness of said main rail, and smaller than a total thickness of said main rail and said auxiliary rail, and the distance between said drive wheel and said auxiliary wheel is extended against the elastic force of said elastic-force loading means by said main rail and said auxiliary rail in the slope region to increase a contact pressure of said drive wheel on said main rail.
